(19) Europäisches Patentamt
European Patent Office
Office européen des brevets

(11) **EP 3 451 240 A1**

(12) **EUROPEAN PATENT APPLICATION**
published in accordance with Art. 153(4) EPC

(43) Date of publication:
**06.03.2019 Bulletin 2019/10**

(51) Int Cl.:
***G06N 3/08*** *(2006.01)*

(21) Application number: **16899762.5**

(22) Date of filing: **27.04.2016**

(86) International application number:
**PCT/CN2016/080320**

(87) International publication number:
**WO 2017/185248 (02.11.2017 Gazette 2017/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Cambricon Technologies Corporation
Limited
Beijing 100190 (CN)**

(72) Inventors:
• **LI, Zhen
  Beijing 100190 (CN)**
• **GUO, Qi
  Beijing 100190 (CN)**
• **CHEN, Yunji
  Beijing 100190 (CN)**
• **CHEN, Tianshi
  Beijing 100190 (CN)**

(74) Representative: **AWA Sweden AB
P.O. Box 5117
200 71 Malmö (SE)**

(54) **APPARATUS AND METHOD FOR PERFORMING AUTO-LEARNING OPERATION OF ARTIFICIAL NEURAL NETWORK**

(57)   The present disclosure provides a device and a method for performing self-learning operations of an artificial neural network. The device includes an instruction storage unit, a controller unit, a data access unit, an interconnection module, a main operation module, and a number of slave operation modules. The present disclosure can perform self-learning pre-training of a multi-layer neural network according to a training mode of layer-by-layer training. For each layer of the network, the self-learning pre-training of the layer of the network is completed when the present disclosure performs many times of operational iterations until the weight is updated to be less than a certain threshold value. Each iteration process can be divided into four stages. Calculation is carried out in the first three stages to respectively generate a first-order hidden layer intermediate value, a first-order visible layer intermediate value and a second-order hidden layer intermediate value. The weight is updated in the last stage with the intermediate values of the first three stages.

FIG. 1

**Description**

TECHNICAL FIELD

The present disclosure relates to the technologies of artificial neural networks, and more particularly to a device and a method for performing self-learning operations of an artificial neural network.

BACKGROUND

Multi-layer artificial neural networks are widely used in the fields of pattern recognition, image processing, function approximation, optimization calculation, et al. In recent years, the multi-layer artificial networks have attracted more and more attentions from academia and industry due to their high recognition accuracy and good parallelism.
A typical training method of multi-layer artificial neural network is the back propagation (BP) algorithm. The method is a representative type on supervising learning. A large number of labeled training samples are required during the training process, but the cost of collecting the samples is very costly. At the same time, during the training process of the method, error correction signal decreases with the increase of the number of propagation layers, and the training tends to converge to the local minimum and the convergence speed is slow. Therefore, it is a new hotspot to pre-train the network parameters by using self-learning algorithm with fast convergence and no labeled training samples, and then use back propagation training to fine-tune the multi-layer neural network. The self-learning operations which are used for pre-training is particularly important.
In a known method supporting self-learning operations of the multi-layer artificial neural network, a general purpose processor is used. The method supports the above operation by executing general purpose instructions using general purpose register files and generic functional components. One of the disadvantages of the method is that the operational performance of a single general purpose processor is low and cannot meet the operation performance requirements of a typical multi-layer artificial neural network. When multiple general purpose processors execute in parallel, communication between the general purpose processors becomes a performance bottleneck. In addition, the general purpose processor needs to decode the pre-training operations of the multi-layer artificial neural network into a long sequence of operations and an accessing and storing instruction sequence, but front-end decoding by the processor brings a large power consumption overhead.
In another known method supporting the pre-training of the multi-layer artificial neural network, a graphics processing unit (GPU) is used. The method supports the above operation by executing generic SIMD instructions using general purpose register files and a general stream processing unit. Since the GPU is a device specially used for performing graphic image operations and scientific calculations, without special support for the operations of the multi-layer artificial neural network, a large amount of front-end decoding operations are still required to perform the operations of the multi-layer artificial neural network, which causes a large amount of additional overhead. In addition, the GPU has only a small on-chip cache, and the model data (weight) of the multi-layer artificial neural network needs to be repeatedly transferred from an off-chip, and the bandwidth of the off-chip becomes the main performance bottleneck, and brings huge power consumption overhead.

SUMMARY

The present disclosure is to solve the following problems. The general purpose processor (GPU or CPU) in prior arts performs pre-training of multi-layer neural network requires a series of simple operations and memory access operations, but the power consumption overhead of the front-end decoding is large, the data memory access overhead of the existing general purpose processor is large, the operational performance of a single general-purpose processor is low, and so on.
The present disclosure provides a device for performing self-learning operations of an artificial neural network, which includes an instruction storage unit, a controller unit, a data access unit, an interconnection module, a main operation module, and a number of slave operation modules. The instruction storage unit is configured to read in instructions through the data access unit and cache the read instructions. The controller unit is configured to read instructions from the instruction storage unit, decode the instructions into control signals for controlling behaviors of the interconnection module, the main operation module, and the slave operation modules, and then distribute the control signals to their corresponding modules. The data access unit is configured to access an external address space to complete data loading and storage. The interconnection module has different topology implementations for distributing input vectors of the main operation module to the slave operation modules, and merging calculation results of each slave operation module and returning the merged calculation results to the main operation module. The main operation module is configured to perform an activation function and Gibbs sampling on an intermediate value returned by the interconnection module, and update a bias of the activation function. The slave operation module is configured to perform a dot product operation on the input vectors and a corresponding weight matrix, perform a product operation on the corresponding component scalar of the input vector and the corresponding weight matrix, and update the weight matrix.

According to a specific embodiment of the present disclosure, the main operation module includes an operation unit, a data dependency determination unit, and a storage unit. The storage unit is configured to cache input data and output data used by the main operation module in calculation process. The operation unit is configured to perform the operations of the main operation module. The data dependency determination unit is a port for the operation unit and for reading and writing the storage unit. The data dependency determination unit is configured to ensure consistency of the reading and writing of data in the storage unit.

According to a specific embodiment of the present disclosure, the data dependency determination unit is configured to determine whether there is a dependency relationship between the data of the control signal that has not been executed and the data of the control signal that is being executed, and if not, the group of control signals are allowed to be transmitted immediately; otherwise, the group of control signals are allowed to be transmitted after all control signals which the group of control signal depends on are fully executed.

According to a specific embodiment of the present disclosure, the data dependency determination unit is further configured to send the read data to the slave operation modules through the interconnect module.

According to a specific embodiment of the present disclosure, each slave operation module includes an operation unit, a data dependency determination unit, a first storage unit, a second storage unit, and a third storage unit. The operation unit is configured to receive control signals sent from the controller unit and perform arithmetic logic operations. The data dependency determining unit is configured to monitor the read and write operations of the storage unit, to ensure that there is no consistency conflict between the reading and writing of the storage unit. The first storage unit is configured to cache input vectors and calculation results of neurons. The second storage unit is configured to cache weight data required by the slave operation module in calculation process. The third storage unit is configured to cache the weight gradient data required by the corresponding operation module in the process of updating the weight.

The present disclosure further provides a method for performing layer-by-layer self-learning operations of an artificial neural network. The artificial neural network includes two or more layers of multiple neurons. The self-learning pre-training to the artificial neural network is layer-by-layer training, for each layer, the pre-training is divided into the following four stages.

In the first stage, a dot product operation of an input neuron vector $\overrightarrow{v_0}$ and a weight vector matrix $\overleftrightarrow{W}$ is performed to obtain a local induced domain, the local induced domain is nonlinearly transformed by an activation function, and then is calculated by Gibbs sampling to obtain a first-order hidden layer intermediate value $\overrightarrow{h_0}$.

In the second stage, a dot product operation of the transposition $\overrightarrow{W}^T$ of the weight vector matrix and the transposition $\overrightarrow{h_0}^T$ of the first-order hidden layer intermediate value is performed, the local induced domain obtained by the dot product operation is nonlinearly transformed by the activation function, and then is sampled by Gibbs to obtain a first-order visible layer intermediate value $\overrightarrow{v_1}$.

In the third stage, the first-order visible layer intermediate value $\overrightarrow{v_1}$ is input, and a dot product operation of the first-order visible layer intermediate value $\overrightarrow{v_1}$ and the weight vector matrix $\overleftrightarrow{W}$ is performed to obtain a local induced domain, the local induced domain is nonlinearly transformed by the activation function to obtain a second hidden layer intermediate value $\overrightarrow{h_1}$.

In the fourth stage, the weight is updated according to the following formulas:

$$\overleftrightarrow{W} \leftarrow \overleftrightarrow{W} - \epsilon\ (\overrightarrow{h_0} \times \overrightarrow{v_0}^T - \overrightarrow{h_1} \times \overrightarrow{v_1}^T)\ \ldots\ldots\ (1)$$

$$\vec{b} \leftarrow \vec{b} - \epsilon\ (\overrightarrow{h_0} - \overrightarrow{h_1})\ \ldots\ldots\ (2)$$

$$\vec{c} \leftarrow \vec{c} - \epsilon\ (\overrightarrow{v_0} - \overrightarrow{v_1})\ \ldots\ldots\ (3)$$

Wherein the vector $\vec{b}$ is a bias of partial sum of the dot product of the vector and the weighting matrix before the activation function is performed in the first stage and the third stage, and the vector $\vec{c}$ is the bias in the second stage; "$\times$" in the formula indicates the cross product of the vectors, $\varepsilon$ indicates the learning rate.

Compared with the prior art, the present disclosure optimizes the pre-training instructions of the multi-layer neural network, and the processor can complete the pre-training learning of one layer of the neural network layer with only one instruction, and the front-end decoding overhead of the general processor instruction is simplified. The present disclosure includes a main operation module, a number of slave operation modules and a large number of distributed on-chip storage to alleviate the memory access overhead, and the pre-training operation of the neural network can be performed in parallel without frequent off-chip data fetching. In summary, the performance-to-power ratio of the present invention is much higher than that of a general purpose processor.

The present disclosure can be applied to the following scenarios (including but not limited to): various types of electronic products such as a data processing device, robots, computers, printers, scanners, telephones, tablets, smart terminals, mobile phones, driving recorders, navigators, sensors, cameras, cloud servers, cameras, camcorders, projectors, watches, earphones, mobile storage, wearable devices, and so on; various types of vehicles such as aircrafts, ships, vehicles, and so on; various types of household appliances such as TVs, air conditionings, microwave ovens, refrigerators, rice cookers, humidifiers, washing machines, electric lights, gas stoves, range hoods, and so on; and various types of medical equipments such as nuclear magnetic resonance instruments, B-ultrasound, electrocardiographs, and so on.

BRIEF DESCRIPTION OF THE DRAWINGS

To understand the present disclosure and its advantages more completely, the following description will be introduced with reference to the accompanying drawings.

FIG. 1 illustrates a schematic block diagram of the overall structure of a device for performing self-learning pre-training of an artificial neural network in accordance with an embodiment of the present disclosure.
FIG. 2 illustrates a schematic diagram of an H-tree structure implementation of an interconnect module in the device for performing the self-learning pre-training of the artificial neural network in accordance with an embodiment of the present disclosure.
FIG. 3 illustrates a schematic block diagram of a structure of a main operation module in the device for performing the self-learning pre-training of the artificial neural network in accordance with an embodiment of the present disclosure.
FIG. 4 illustrates a schematic block diagram of a structure of a slave operation module in the device for performing the self-learning pre-training of the artificial neural network in accordance with an embodiment of the present disclosure.
FIG. 5 illustrates a schematic block diagram of a first stage and a third stage of a self-learning pre-training process of a neural network in accordance with an embodiment of the present disclosure.
FIG. 6 illustrates a schematic block diagram of a second stage of the self-learning pre-training process of the neural network in accordance with an embodiment of the present disclosure.
FIG. 7 illustrates a schematic flowchart of a fourth stage of the self-learning pre-training process of the neural network in accordance with an embodiment of the present disclosure.
FIG. 8 illustrates a schematic flowchart of one iteration of the self-learning pre-training of a single layer neural network according to an embodiment of the present disclosure.

In all of the accompanying drawings, the same devices, components, units, and the like are denoted by the same reference numerals.

DETAILED DESCRIPTION

According to the following detailed description of the exemplary embodiments of the disclosure with reference to the accompanying drawings, other aspects, advantages, and salient features of the present disclosure will be apparent to those skilled in the art.
In the present disclosure, the terms "include" and "have" as well as their derivatives are intended to inclusion and not limiting. The term "or" is inclusive, meaning and/or.
In the present specification, the following various embodiments for describing the principles of the present disclosure are merely illustrative and should not be construed as limiting the scope of the disclosure. The following description with reference of the accompanying drawings is provided to assist in a comprehensive understanding of the exemplary embodiments of the present disclosure defined by the claims and their equivalents. The following description includes various specific details to assist the understanding, but these details are considered to be merely exemplary. Accordingly, it will be appreciated by those skilled in the art that various changes and modifications of the embodiments described herein may be made without departing from the scope and spirit of the present disclosure. In addition, descriptions of well-known functions and constructions are omitted for clarity and conciseness. In addition, the same reference numerals are used throughout the drawings for similar functions and operations.
According to the self-learning pre-training of a multi-layer artificial neural network according to an embodiment of the present disclosure, the artificial neural network includes two or more layers of multiple neurons. The self-learning pre-training to the artificial neural network is layer-by-layer training, starting from the first layer to the last layer. For each layer, the pre-training is divided into the following four stages.

In the first stage, a dot product operation of an input neuron vector $\vec{v_0}$ and a weight vector matrix $\overleftrightarrow{W}$ is first performed to obtain a local induced domain. The local induced domain is nonlinearly transformed by an activation function, and then is calculated by Gibbs sampling to obtain a first-order hidden layer intermediate value $\vec{h_0}$.

In the second stage, a dot product operation of the transposition $\overleftrightarrow{W^T}$ of the weight vector matrix and the transposition $\vec{h_0}^T$ of the first-order hidden layer intermediate value is first performed, the local induced domain obtained by the dot product operation is nonlinearly transformed by the activation function, and then is sampled by Gibbs to obtain a first-order visible layer intermediate value $\vec{v_1}$.

The third stage is similar to the first stage, the difference is that the input of the third stage is the first-order visible layer intermediate value $\vec{v_1}$, and the Gibbs sampling is not required before calculating a second hidden layer intermediate value $\vec{h_1}$.

In the fourth stage, the weight is updated according to the following formulas.

$$\overleftrightarrow{W} \leftarrow \overleftrightarrow{W} - \epsilon \ (\vec{h_0} \times \vec{v_0}^T - \vec{h_1} \times \vec{v_1}^T) \ \dots\dots \ (1)$$

$$\vec{b} \leftarrow \vec{b} - \epsilon \ (\vec{h_0} - \vec{h_1}) \ \dots\dots \ (2)$$

$$\vec{c} \leftarrow \vec{c} - \epsilon \ (\vec{v_0} - \vec{v_1}) \ \dots\dots \ (3)$$

The vector $\vec{b}$ is a bias of partial sum of the dot product of the vector and the weighting matrix before the activation function is performed in the first stage and the third stage, and the vector $\vec{c}$ is the bias in the second stage. "$\times$" in the formula indicates the cross product of the vectors, $\varepsilon$ indicates the learning rate.

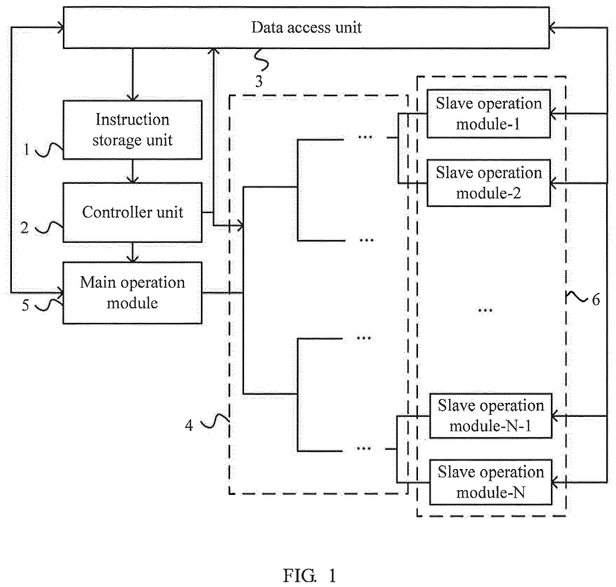

FIG. 1 illustrates a schematic block diagram of the overall structure of a device for performing self-learning pre-training of an artificial neural network in accordance with an embodiment of the present disclosure. As illustrated in FIG. 1, the device includes an instruction storage unit 1, a controller unit 2, a data access unit 3, an interconnection module 4, a main operation module 5, and a number of slave operation modules 6. The instruction storage unit 1, the controller unit 2, the data access unit 3, the interconnection module 4, the main operation module 5, and the slave operation modules 6 can all be implemented by hardware circuits such as an application specific integrated circuit (ASIC).

The instruction storage unit 1 reads in instructions through the data access unit 3 and caches the read instructions.

The controller unit 2 reads instructions from the instruction storage unit 1, decodes the instructions into control signals for controlling behaviors of other modules, and transmits the control signals to the other modules such as the data access unit 3, the main operation module 5, the slave operation modules 6, and so on.

The data access unit 3 can access an external address space, directly read and write data to each storage unit inside the device, and complete data loading and storage.

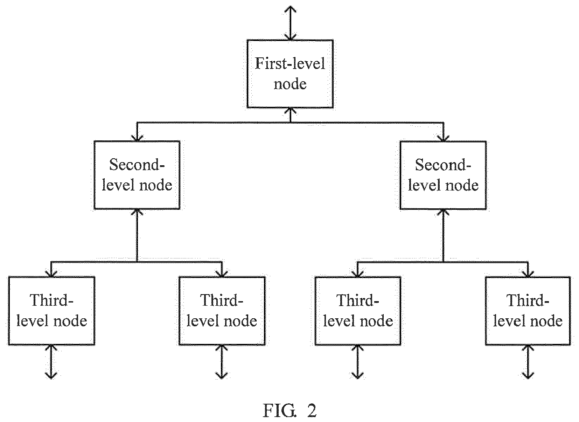

FIG. 2 schematically illustrates a structure of the interconnection module 4. The interconnection module 4 constitutes a data path between the main operation module 5 and the slave operation modules 6, and has different structures. The interconnection is a binary tree path consisting of multiple nodes. Each node sends data of upstream to two nodes of downstream in the same way, combines the data returned by the two downstream nodes, and returns the combined data to the upstream node. For example, in the first stage and the third stage of the self-learning operation of the neural network, the input vector in the main operation module 5 is sent to each slave operation module 6 through the interconnection module 4; when the calculation processes of the slave operation modules are completed, the value of the neuron output from each slave operation module will be merged into a complete vector consisting of local induced domains in the interconnect module, and the merged vector is as an intermediate result vector and is returned to the main operation module 5 to perform the activation function, and Gibbs sampling is performed as required. In the second stage, the first-order hidden layer intermediate value vector $\vec{h_0}$ in the main operation module 5 is sent to each slave operation module 6 through the interconnection module 4; when the calculation process of the slave operation modules 6 are completed, the vectors returned from the two nodes of the downstream will be merged into a vector at the current node, and the merged vector is returned to the upstream node, to be as an intermediate result vector and then is returned to the main operation module 5 to perform the activation function and Gibbs sampling.

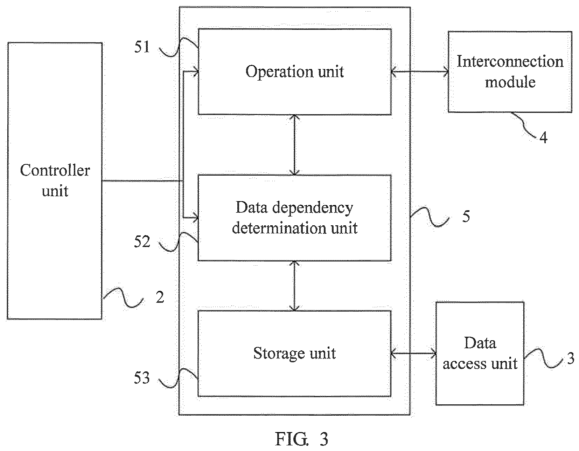

FIG. 3 illustrates a schematic block diagram of a structure of the main operation module 5 in the device for performing the self-learning pre-training of the artificial neural network according to the present disclosure. As illustrated in FIG. 3, the main operation module 5 includes an operation unit 51, a data dependency determination unit 52, and a storage unit 53.

The storage unit 53 is configured to cache input data and output data used by the main operation module 5 in calculation process. The operation unit 51 performs various operation functions of the main operation module 5. The data dependency determination unit 52 is a port for the operation unit 51 to read and write the storage unit 53. The data dependency determination unit is configured to ensure consistency of the reading and writing of data in the storage unit. Specifically, the data dependency determining unit 52 determines whether there is a dependency relationship between the data of the control signal that has not been executed and the data of the control signal that is being executed, and if not, the group of control signals are allowed to be transmitted immediately; otherwise, the group of control signals are allowed to be transmitted after all control signals on which the group of control signal depends are fully executed. For example, all control signals sent to the data dependency unit 52 are stored in an instruction queue inside the data dependency unit 52. In the queue, when there is a conflict between the read data range of a read instruction and the write data range of a write instruction in a front location of the queue, the read instruction must wait and can be executed after the write instruction on which the read instruction depends is executed. At the same time, the data dependency determination unit 52 is also responsible for transmitting the read data to the slave operation module through the interconnection module 4. The output data from the slave operation module 6 is directly transmitted to the operation unit 51 through the interconnection module 4. The command output from the controller unit 2 is sent to the operation unit 51 and the data dependency determination unit 52 to control their behaviors.

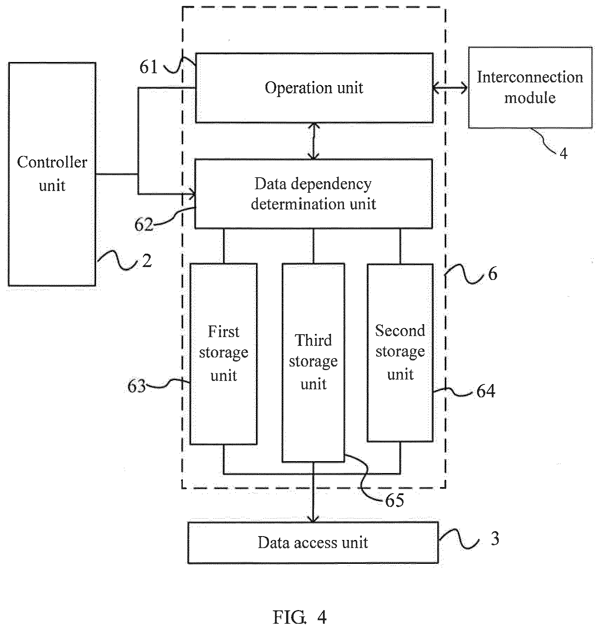

FIG. 4 illustrates a schematic block diagram of a structure of the slave operation module 6 in the device for performing the self-learning pre-training of the artificial neural network according to the present disclosure. As illustrated in FIG. 4, each slave operation module 6 includes an operation unit 61, a data dependency determination unit 62, and a first storage unit 63, a second storage unit 64 and a third storage unit 65.

The operation unit 61 receives control signals sent from the controller unit 2 and performs arithmetic logic operations.

The data dependency determination unit 62 is responsible for reading and writing operations of cache units in the calculation process. The data dependency determination unit 62 ensures that there is no consistency conflict between the reading and writing of the cache units. For example, all control signals sent to the data dependency unit 62 are stored in an instruction queue inside the data dependency unit 62. In the queue, when there is a conflict between the read data range of a read instruction and the write data range of a write instruction in a front location of the queue, the read instruction must wait and can be executed after the write instruction on which the read instruction depends is executed.

The first storage unit 63 caches the input neuron vector $\overrightarrow{v_0}$, the first-order hidden layer intermediate value $\overrightarrow{h_0}$, the first-order visible layer intermediate value $\overrightarrow{v_1}$, and the first-order hidden layer intermediate value $\overrightarrow{h_1}$ of each stage of the process, and dot product calculation results of the input vectors and the weight matrix of each stage.

The second storage unit 64 caches the weight data required by the slave operation module 6 in the calculation process. For each slave operation module, only the columns in the weight matrix corresponding to the scalar data stored in the slave operation module 6 are stored.

The third storage unit 65 caches the weight gradient data required by the corresponding operation module in the process of updating the weight. For each slave operation module 6, the stored weight gradient data corresponds to the stored weight data.

The slave operation module 6 performs the first half of the first three stages of the self-learning pre-training process of the artificial neural network, and the weight update of the formula (1) of the last stage.

Taking the pre-training of Artificial Neural Network Deep Belief Network (DBN) as an example, the multiplication of the weight matrix $\overleftrightarrow{W}$ (or $\overleftrightarrow{W^T}$) and the input neuron vector $\overrightarrow{v_0}$ in the first three stages can be divided into unrelated parallel computing sub-tasks. In the first stage and the third stage, each slave operation module 6 performs a dot product multiplication operation using the same input vector value and weights corresponding to different components of the output vector, and respectively obtains partial sums corresponding to different components of the output vector. These final sums corresponding to respective output components are obtained after a number of accumulation operations and are progressively combined into a complete local induced domain vector in the interconnect module 4. Each slave operation module 6 only needs to calculate the local induced domain corresponding to the corresponding output neuron value of the module itself. The different local induced domain components are progressively combined in the interconnect module 4 into a complete local induced domain vector and then transmitted to the main operation module for the activation function and subsequent sampling. In the second stage, each slave operation module 6 calculates only the product of the corresponding partial scalar of the input first-order hidden layer intermediate value vector $\overrightarrow{h_0}$ and the corresponding column of the weight matrix $\overleftrightarrow{W}$, and each output vector obtained is a partial sum of the final result to be accumulated. These partial sums are added to each other in the interconnect module to obtain the final result. Each of the slave operation modules 6 calculates a partial sum of the local induced domain of the output first-order visible layer vector, and a summation operation of all the partial sums is performed in the interconnect module 4 to obtain the final local induced domain. The first three stages calculate the intermediate value for updating the weight, and the main operation module 5 performs subsequent operations based on the output of the first three stage operations to obtain a weight update value. In the last stage, the slave operation module 6 updating the weight according to the formula (1) can also be divided into the following three small stages.

First, each slave operation module 6 calculates a product intermediate value of the input first-order hidden layer intermediate value vector $\overrightarrow{h_0}$ and the corresponding partial scalar of the input neuron $\overrightarrow{v_0}$.

Second, each slave operation module 6 calculates a product of the input first-order hidden layer intermediate value vector $\overrightarrow{h_1}$ and the corresponding partial scalar of the first-order visible layer vector $\overrightarrow{v_1}$, and calculates a vector difference between the product and the intermediate value of the first small stage.

Third, each slave operation module 6 calculates the product of the difference of the second small stage and the learning rate to obtain a weight update value, and then performs vector subtraction using the weight update value and the weight $\overrightarrow{W}$ to obtain an updated weight.

It should be noted that, the above three small stages are only an example description of updating the weights by the slave operation module 6, and the user can fine-tune the details. For example, the calculation of the product in the first small stage and the calculation of the product in the second small stage can be interchanged. Alternatively, the product of the learning rate in the third small stage can be advanced to the second small stage or can be even split and merged into the first two small stages.

According to an embodiment of the present disclosure, an instruction set for performing inference operations of the artificial neural network in the foregoing apparatus is also provided. The instruction set includes a CONFIG instruction, a COMPUTE instruction, an IO instruction, a NOP instruction, a JUMP instruction, and a MOVE instruction.

The CONFIG instruction configures various constants required for the calculation of the current layer before the calculation of each layer of the artificial neural network begins.

The COMPUTE instruction completes the arithmetic logic calculation of each layer of the artificial neural network.

The IO instruction reads in input data required for the calculation from external address space, and storing the data back to the external space after the calculation is completed.

The NOP instruction is responsible for clearing the control signals currently loaded into all internal control signal cache queues, ensuring that all instructions preceding the NOP instruction are completely executed. The NOP instruction itself does not contain any operations.

The JUMP instruction is responsible for the jump of an address of the next instruction that the controller will read from an instruction storage unit, to implement the jump of the control flow.

The MOVE instruction is responsible for transferring data in an address of the internal address space of the device to another address of the internal address space of the device. The process is independent of the operation unit and does not occupy the resources of the operation unit during execution.

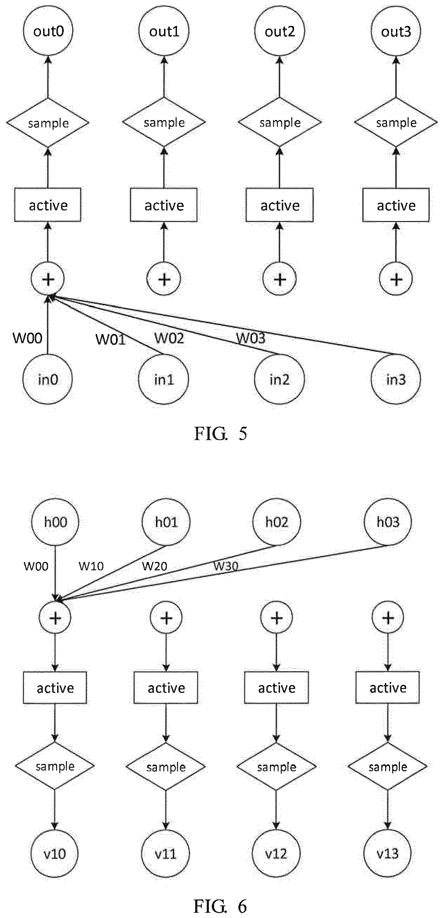

FIG. 5 illustrates a schematic block diagram of a first stage and a third stage of a self-learning pre-training process of a neural network in accordance with an embodiment of the present disclosure. In different slave operation module 6, the input vectors broadcast by the interconnect module 4 are respectively subjected to a dot product operation with the weight vector of the slave operation module 6, to obtain the partial sums of the local induced domain of the corresponding output neuron value. All of the output local induced domain values constitute an intermediate result vector. The intermediate result vector is subjected to an addition bias vector and an activation operation to obtain a final output neuron vector of the layer neural network. The formula is described as out=f(w*in+b), where "out" is the output vector, "in" is the input vector, "b" is the bias vector, "w" is the weight matrix, and "f' is the activation function. The weight vector of each slave operation module 6 is a column vector of the weight matrix, the column vector corresponds to the slave operation module 6. The interconnect module 4 sends the input vector $[I_0,...,I_n]$ to all of the slave operation modules, temporarily stored in the first storage unit. For the i-th slave operation module, the dot product of the corresponding weight vector $[W_{i0},...,W_{in}]$ and the input vector is calculated. The result of the slave operation module is merged into a complete local induced domain vector by the interconnect module 4 and the complete local induced domain vector is returned to the main operation module 5. The active function operation and its possible Gibbs sampling are performed in the main operation module 5 to obtain the final output vector $[O_0,O_1,...,O_n]$.

FIG. 6 illustrates a schematic block diagram of a second stage of the self-learning pre-training process of the neural network in accordance with an embodiment of the present disclosure. The process of calculating the output first-order visible layer vector $\overrightarrow{v_1}$ is that the interconnect module 4 broadcasts the first-order hidden layer vector value, and each slave operation module 6 calculates the product of the corresponding partial scalar $\overline{h_{0i}}$ of the input first-order hidden layer intermediate value vector $\overrightarrow{h_0}$ and the corresponding column $[W_{i0},...,W_{in}]$ of the weight matrix $\overrightarrow{W}$, and each output vector obtained is a partial sum of the local induced domain of the first-order visible layer vector to be accumulated. These partial sums are added to each other in the interconnecting module 4 to obtain the final local induced domain. The calculated local induced domain is returned to the main operation module 5. The active function operation and the possible Gibbs sampling are performed in the main operation module 5 to obtain the final output first-order visible layer

vector $\overrightarrow{v_1}$.

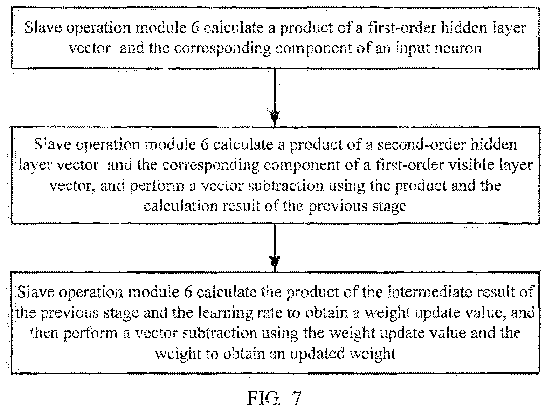

FIG. 7 illustrates a schematic flowchart of a fourth stage of the self-learning pre-training process of the neural network in accordance with an embodiment of the present disclosure. In the last stage, the slave operation module 6 updating the weight according to the formula (1) can also be divided into the following three small stages.

First, each slave operation module 6 calculates a product intermediate value of the input first-order hidden layer intermediate value vector $\overrightarrow{h_0}$ and the corresponding partial scalar of the input neuron $\overrightarrow{v_0}$, and caches the product intermediate value to the third storage unit illustrated in FIG. 4. The small stage is similar to the block diagram of the second stage illustrated in FIG. 6, but the inputs are the first-order hidden layer intermediate value vector $\overrightarrow{h_0}$ and the input neuron $\overrightarrow{v_0}$.

Second, each slave operation module 6 calculates a product of the input first-order hidden layer intermediate value vector $\overrightarrow{h_1}$ and the corresponding partial scalar of the first-order visible layer vector $\overrightarrow{v_1}$, calculates a vector difference between the product and the intermediate value of the first small stage, and caches the vector difference to the third storage unit illustrated in FIG. 4.

Third, each slave operation module 6 calculates the product of the difference of the second small stage and the learning rate to obtain a weight update value, and then performs vector subtraction using the weight update value and the weight $\overrightarrow{W}$ to obtain an updated weight.

It should be noted that, the above three small stages are only an example description of updating the weights by the slave operation module 6, and the user can fine-tune the details. For example, the calculation of the product in the first small stage and the calculation of the product in the second small stage can be interchanged. Alternatively, the product of the learning rate in the third small stage can be advanced to the second small stage or can be even split and merged into the first two small stages.

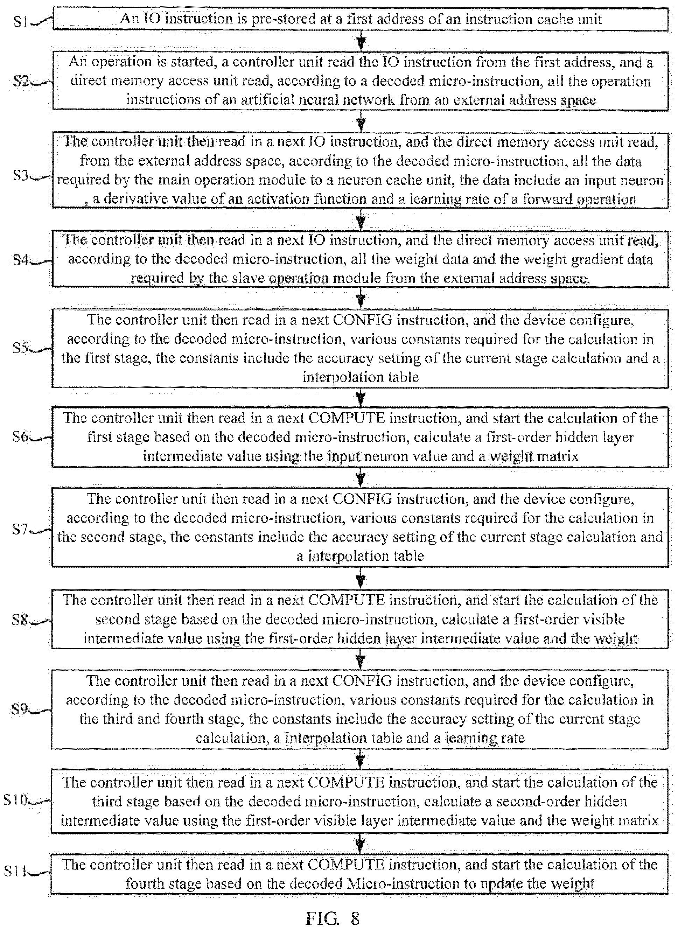

FIG. 8 illustrates a schematic flowchart of one iteration of the self-learning pre-training of a single layer neural network according to an embodiment of the present disclosure. Since the self-learning pre-training of the multi-layer artificial neural network can adopt a training mode of layer-by-layer training, the pre-training of the multi-layer artificial neural network can be performed by invoking the process multiple times. The flowchart describes the process for implementing the self-learning pre-training operation of a single layer neural network illustrated in FIG. 4 using the apparatus and instruction set of the present disclosure.

At step S1, an IO instruction is pre-stored at a first address of the instruction storage unit 1.

At step S2, the operation is started, the controller unit 2 reads the IO instruction from the first address of the instruction storage unit 1, and the data access unit 3 reads, according to the decoded control signal, all the corresponding operation instructions of the artificial neural network from the external address space, and cache the instructions in the instruction storage unit 1.

At step S3, the controller unit 2 then reads in a next IO instruction from the instruction storage unit, and the data access unit 3 reads, from the external address space, according to the decoded control signal, all the data (for example, including the input neuron vector $\overrightarrow{v_0}$, an interpolation table of the activation function, a learning rate, a transposition, etc.) required by the main operation module 5, to the storage unit 53 of the main operation module 5.

At step S4, the controller unit 2 then reads in a next IO instruction from the instruction storage unit, and the data access unit 3 reads, according to the decoded control signal, the weight matrix data required by the slave operation module 6 from the external address space.

At step S5, the controller unit 2 then reads in a next CONFIG instruction from the instruction storage unit, and the device configures, according to the decoded control signal, various constants required for the calculation in the first stage of the layer neural network. For example, the operation units 51 and 61 configures the value of the internal register of the units according to the parameters in the control signal. The parameters include, for example, the accuracy setting of the current layer calculation and the data of the activation function.

At step S6, the controller unit 2 then reads in a next COMPUTE instruction from the instruction storage unit, and starts the calculation of the first stage based on the decoded control signal. The main operation module 5 first sends the input neuron vector $\overrightarrow{v_0}$ to each slave operation module 6 through the interconnection module 4, and stores the input neuron vector $\overrightarrow{v_0}$ in the first storage unit 63 of the slave operation module 6. The operation unit 61 of the slave operation module 6 reads the weight vector (the column vector corresponding to the slave operation module 6 in the weight matrix) from the second storage unit 64, reads the input neuron vector $\overrightarrow{v_0}$ from the first storage unit, and completes the dot product of the weight vector and the input neuron vector $\overrightarrow{v_0}$, and then returns an intermediate result through the interconnection module. In the interconnect module 4, the intermediate results returned from each of the salve operation modules 6 are progressively combined into a complete local induced domain vector. The main operation module 5 obtains the value returned from the interconnection module 4, reads the bias vector from the storage unit 53 according to the control signal decoded by the COMPUTE instruction, adds the bias vector to the vector returned from the interconnection module 4, and then performs the activation o the addition result, perform Gibbs sampling, and write the final first-order hidden layer vector $\overrightarrow{h_0}$ back to the storage unit 53.

At step S7, the controller unit 2 then reads in a next CONFIG instruction from the instruction storage unit, and the device configures, according to the decoded control signal, various constants required for the calculation in the second stage of the layer neural network.

At step S8, the controller unit 2 then reads in a next COMPUTE instruction from the instruction storage unit, and starts the calculation of the second stage based on the decoded control signal. The main operation module 5 first sends the first-order hidden layer intermediate value vector $\overrightarrow{h_0}$ to each slave operation module 6 through the interconnection module 4, and stores the first-order hidden layer intermediate value vector $\overrightarrow{h_0}$ in the first storage unit 63 of the slave operation module 6. The operation unit 61 of the slave operation module 6 reads the weight vector (the column vector corresponding to the slave operation module 6 in the weight matrix) from the second storage unit 64, selects the scalar of the first-order hidden layer intermediate value vector $\overrightarrow{h_0}$ from the first storage unit, to complete the dot product of the weight vector and the corresponding scalar of the first-order hidden layer intermediate value vector $\overrightarrow{h_0}$, and then returns an intermediate result through the interconnection module. In the interconnect module 4, the intermediate results returned from each of the salve operation modules 6 are progressively added into a complete local induced domain vector. The main operation module 5 obtains the value returned from the interconnection module 4, reads the bias vector from the storage unit 53 according to the control signal decoded by the COMPUTE instruction, adds the bias vector to the vector returned from the interconnection module 4, and then performs the activation o the addition result, perform Gibbs sampling, and write the final first-order visible layer vector $\overrightarrow{v_1 v_0}$ back to the storage unit 53.

At step S9, the controller unit 2 then reads in a next CONFIG instruction from the instruction storage unit, and the device configures, according to the decoded control signal, various constants required for the calculation in the third stage of the layer neural network. The configuration of this layer is basically the same as the first phase, but it is also necessary to configure a learning rate parameter.

At step S10, the controller unit 2 then reads in a next COMPUTE instruction from the instruction storage unit, and starts the calculation of the third stage based on the decoded control signal. The main operation module 5 first sends the first-order hidden layer vector $\overrightarrow{v_1}$ to each slave operation module 6 through the interconnection module 4, and stores the first-order hidden layer vector $\overrightarrow{v_1}$ in the first storage unit 63 of the slave operation module 6. The first-order hidden layer vector $\overrightarrow{v_1}$ is read from the first storage unit, the dot product of the weight vector and the first-order hidden layer vector $\overrightarrow{v_1}$ is completed, and an intermediate result is returned through the interconnection module. In the interconnect module 4, the intermediate results returned from each of the salve operation modules 6 are progressively combined into a complete local induced domain vector. The main operation module 5 obtains the value returned from the interconnection module 4, reads the bias vector from the storage unit 53 according to the control signal decoded by the COMPUTE instruction, adds the bias vector to the vector returned from the interconnection module 4, and then performs the activation o the addition result, perform Gibbs sampling, and write the final first-order hidden layer vector $\overrightarrow{h_1}$ back to the storage unit 53.

At step S11, the controller unit 2 then reads in a next COMPUTE instruction from the instruction storage unit, and starts the calculation of the fourth stage based on the decoded control signal. In a first small stage, the main operation module 5 first sends the input neuron $\overrightarrow{v_0}$ and the first-order hidden layer vector $\overrightarrow{h_0}$ to each slave operation module 6 through the interconnection module 4, and stores the input neuron $\overrightarrow{v_0}$ and the first-order hidden layer vector $\overrightarrow{h_0}$ in the weight gradient cache unit 65 of the slave operation module 6. In a second stage, the operation unit 61 of the slave operation module 6 reads the first-order hidden layer vector $\overrightarrow{h_0}$ from the first storage unit and selects the component corresponding to the input neuron $\overrightarrow{v_0}$, and completes the dot product of the first-order hidden layer vector $\overrightarrow{h_0}$ and the component of the corresponding input neuron $\overrightarrow{v_0}$. The intermediate result and the intermediate value cached in the previous small stage and read from the weight gradient cache unit 65 are subjected to vector subtraction, and the calculated intermediate result is cached to the weight gradient cache unit 65. In a last small stage, the operation unit 61 of the slave operation module 6 reads the intermediate value of the previous small stage form the weight gradient cache unit 65 for multiplication with the learning rate to obtain a weight update value, and reads the corresponding weight and the weight update value from the weight cache unit 64 for vector subtraction, and an updated weight is obtained and cached back to the weight cache unit 64. In this way, a self-learning pre-training iteration of the single-layer neural network is completed. After multiple iterations of learning, the weight reaches a certain convergence criterion (the weight update value is less than a certain threshold). The pre-training of the single-layer neural network is completed, and the pre-training of the next layer of the neural networks can be started.

By using the device for performing the self-learning pre-training operation of the artificial neural network and the instruction set, the problems of insufficient operation performance of the CPU and the GPU and large overhead of front-end decoding are solved, and the support for the forward operation of the multi-layer artificial neural networks is effectively improved.

By using a dedicated on-chip cache for the forward operations of the multi-layer artificial neural network, the reusability of the input neurons and the weight data is fully exploited, which prevents repeatedly reading these data into the memory, reducing the memory access bandwidth, and prevents the memory bandwidth becoming the performance bottleneck of the inference operation of the multi-layer artificial neural network.

The processes or methods described in the preceding accompanying drawings may be performed by hardware (eg, circuits, dedicated logic, etc.), firmware, software (eg, software embodied on a non-transitory computer readable medium), or processing logic of a combination thereof. Although the processes or methods have been described above in the some order, it should be understood that certain operations described can be performed in different orders. Moreover, some operations may be performed in parallel rather than in sequence.

In the foregoing specification, various embodiments of the present disclosure have been described with reference to specific exemplary embodiments of the specification. Obviously, various modifications may be made to the various embodiments without departing from the broader spirit and scope of the present disclosure as set forth in the appended claims. Accordingly, the specification and accompany drawings are to be regarded as illustrative rather than limiting.

**Claims**

1. A device for performing self-learning operations of an artificial neural network, comprising an instruction storage unit, a controller unit, a data access unit, an interconnection module, a main operation module, and a plurality of slave operation modules, wherein,

   the instruction storage unit is configured to read in instructions through the data access unit and cache the read instructions;
   the controller unit is configured to read instructions from the instruction storage unit, decode the instructions into control signals for controlling behaviors of the interconnection module, the main operation module, and the slave operation modules, and then distribute the control signals to their corresponding modules;
   the data access unit is configured to access an external address space to complete data loading and storage;
   the interconnection module has different topology implementations for distributing input vectors of the main operation module to the slave operation modules, and merging calculation results of each slave operation module and returning the merged calculation results to the main operation module;
   the main operation module is configured to perform an activation function and Gibbs sampling on an intermediate value returned by the interconnection module, and update a transposition of the activation function; and
   the slave operation module is configured to perform a dot product operation on the input vectors and a corresponding weight matrix, perform a product operation on the corresponding component scalar of the input vector and the corresponding weight matrix, and update the weight matrix.

2. The device for performing self-learning operations of an artificial neural network of claim 1, wherein the main operation module comprises an operation unit, a data dependency determination unit, and a storage unit, wherein,
   the storage unit is configured to cache input data and output data used by the main operation module in calculation process;
   the operation unit is configured to perform the operations of the main operation module; and
   the data dependency determination unit is a port for the operation unit to read and write the storage unit, the data dependency determination unit is configured to ensure consistency of the reading and writing of data in the storage unit.

3. The device for performing self-learning operations of an artificial neural network of claim 2, wherein the data dependency determination unit is configured to determine whether there is a dependency relationship between the control signal that has not been executed and the data of the control signal that is being executed, and if not, the group of control signals are allowed to be transmitted immediately; otherwise, the group of control signals are allowed to be transmitted after all control signals on which the control signal depends are fully executed.

4. The device for performing self-learning operations of an artificial neural network of claim 3, wherein the data dependency determination unit is further configured to send the read data to the slave operation modules through the interconnect module.

5. The device for performing self-learning operations of an artificial neural network of claim 1, wherein each slave operation module comprises an operation unit, a data dependency determination unit, a first storage unit, a second storage unit, and a third storage unit, wherein,

the operation unit is configured to receive control signals sent from the controller unit and perform arithmetic logic operations;

the data dependency determining unit is configured to monitor the read and write operations of the storage units, to ensure that there is no consistency conflict between the reading and writing of the storage units;

the first storage unit is configured to cache input vectors and calculation results of neurons;

the second storage unit is configured to cache weight data required by the slave operation module in calculation process; and

the third storage unit is configured to cache the weight gradient data required by the corresponding operation module in the process of updating the weight.

6. A method for performing layer-by-layer self-learning operations of an artificial neural network, the artificial neural network comprising two or more layers of multiple neurons; wherein the self-learning pre-training to the artificial neural network is layer-by-layer training, for each layer, the pre-training is divided into the following four stages:

in the first stage, a dot product operation of an input neuron vector $\vec{v_0}$ and a weight vector matrix $\overleftrightarrow{W}$ is performed to obtain a local induced domain, the local induced domain is nonlinearly transformed by an activation function, and then is calculated by Gibbs sampling to obtain a first-order hidden layer intermediate value $\vec{h_0}$;

in the second stage, a dot product operation of the transposition $\overleftrightarrow{W}^T$ of the weight vector matrix and the transposition $\vec{h_0}^T$ of the first-order hidden layer intermediate value is performed, the local induced domain obtained by the dot product operation is nonlinearly transformed by the activation function, and then is sampled by Gibbs to obtain a first-order visible layer intermediate value $\vec{v_1}$;

in the third stage, the first-order visible layer intermediate value $\vec{v_1}$ is input, and a dot product operation of the first-order visible layer intermediate value $\vec{v_1}$ and the weight vector matrix $\overleftrightarrow{W}$ is performed to obtain a local induced domain, the local induced domain is nonlinearly transformed by the activation function to obtain a second hidden layer intermediate value $\vec{h_1}$;

in the fourth stage, the weight is updated according to the following formulas:

$$\overleftrightarrow{W} \leftarrow \overleftrightarrow{W} - \epsilon\ (\vec{h_0} \times \vec{v_0}^T - \vec{h_1} \times \vec{v_1}^T)\ \ldots\ldots\ (1)$$

$$\vec{b} \leftarrow \vec{b} - \epsilon\ (\vec{h_0} - \vec{h_1})\ \ldots\ldots\ (2)$$

$$\vec{c} \leftarrow \vec{c} - \epsilon\ (\vec{v_0} - \vec{v_1})\ \ldots\ldots\ (3)$$

wherein the vector $\vec{b}$ is an addition transposition of partial sum of the dot product of the vector and the weighting matrix before the activation function is performed in the first stage and the third stage, and the vector $\vec{c}$ is the transposition in the second stage; "X " in the formula indicates the cross product of the vectors, $\varepsilon$ indicates the learning rate.

FIG. 1

FIG. 2

FIG. 3

FIG. 4

FIG. 5

FIG. 6

Slave operation module 6 calculate a product of a first-order hidden layer vector and the corresponding component of an input neuron

Slave operation module 6 calculate a product of a second-order hidden layer vector and the corresponding component of a first-order visible layer vector, and perform a vector subtraction using the product and the calculation result of the previous stage

Slave operation module 6 calculate the product of the intermediate result of the previous stage and the learning rate to obtain a weight update value, and then perform a vector subtraction using the weight update value and the weight to obtain an updated weight

FIG. 7

S1 — | An IO instruction is pre-stored at a first address of an instruction cache unit |

↓

S2 — | An operation is started, a controller unit read the IO instruction from the first address, and a direct memory access unit read, according to a decoded micro-instruction, all the operation instructions of an artificial neural network from an external address space |

↓

S3 — | The controller unit then read in a next IO instruction, and the direct memory access unit read, from the external address space, according to the decoded micro-instruction, all the data required by the main operation module to a neuron cache unit, the data include an input neuron, a derivative value of an activation function and a learning rate of a forward operation |

↓

S4 — | The controller unit then read in a next IO instruction, and the direct memory access unit read, according to the decoded micro-instruction, all the weight data and the weight gradient data required by the slave operation module from the external address space. |

↓

S5 — | The controller unit then read in a next CONFIG instruction, and the device configure, according to the decoded micro-instruction, various constants required for the calculation in the first stage, the constants include the accuracy setting of the current stage calculation and a interpolation table |

↓

S6 — | The controller unit then read in a next COMPUTE instruction, and start the calculation of the first stage based on the decoded micro-instruction, calculate a first-order hidden layer intermediate value using the input neuron value and a weight matrix |

↓

S7 — | The controller unit then read in a next CONFIG instruction, and the device configure, according to the decoded micro-instruction, various constants required for the calculation in the second stage, the constants include the accuracy setting of the current stage calculation and a interpolation table |

↓

S8 — | The controller unit then read in a next COMPUTE instruction, and start the calculation of the second stage based on the decoded micro-instruction, calculate a first-order visible intermediate value using the first-order hidden layer intermediate value and the weight |

↓

S9 — | The controller unit then read in a next CONFIG instruction, and the device configure, according to the decoded micro-instruction, various constants required for the calculation in the third and fourth stage, the constants include the accuracy setting of the current stage calculation, a Interpolation table and a learning rate |

↓

S10 — | The controller unit then read in a next COMPUTE instruction, and start the calculation of the third stage based on the decoded micro-instruction, calculate a second-order hidden intermediate value using the first-order visible layer intermediate value and the weight matrix |

↓

S11 — | The controller unit then read in a next COMPUTE instruction, and start the calculation of the fourth stage based on the decoded Micro-instruction to update the weight |

FIG. 8

<table>
<tr><td colspan="2" align="center"><b>INTERNATIONAL SEARCH REPORT</b></td><td>International application No.<br><br><b>PCT/CN2016/080320</b></td></tr>
</table>

**A. CLASSIFICATION OF SUBJECT MATTER**

G06N 3/08 (2006.01) i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: controller, processor, network, activate, dot product, compute, process, CPU, GPU, vector, neural, net, BPNN, learn, train, weight, update, gibbs, sample, dot, product, bias

**C. DOCUMENTS CONSIDERED TO BE RELEVANT**

| Category* | Citation of document, with indication, where appropriate, of the relevant passages | Relevant to claim No. |
|---|---|---|
| A | CN 103150596 A (BAIDU ONLINE NETWORK TECHNOLOGY (BEIJING) CO., LTD.), 12 June 2013 (12.06.2013), description, paragraphs [0030]-[0038], and figures 2-6 | 1-6 |
| A | CN 105144203 A (GOOGLE INC.), 09 December 2015 (09.12.2015), the whole document | 1-6 |
| A | CN 101833691 A (XI'AN UNIVERSITY OF TECHNOLOGY), 15 September 2010 (15.09.2010), the whole document | 1-6 |
| A | CN 101625735 A (XI'AN UNIVERSITY OF TECHNOLOGY), 13 January 2010 (13.01.2010), the whole document | 1-6 |
| A | US 5631469 A (THE UNITED STATES OF AMERICA AS REPRESENTED BY THE SECRETARY OF THE ARMY), 20 May 1997 (20.05.1997), the whole document | 1-6 |

☐ Further documents are listed in the continuation of Box C.      ☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>16 January 2017 (16.01.2017) | Date of mailing of the international search report<br><br>**03 February 2017 (03.02.2017)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**YU, Bai**<br><br>Telephone No.: (86-10) **62413631** |

Form PCT/ISA/210 (second sheet) (July 2009)

## INTERNATIONAL SEARCH REPORT
### Information on patent family members

International application No.

**PCT/CN2016/080320**

| Patent Documents referred in the Report | Publication Date | Patent Family | Publication Date |
|---|---|---|---|
| CN 103150596 A | 12 June 2013 | None | |
| CN 105144203 A | 09 December 2015 | GB 2513105 A | 22 October 2014 |
| | | WO 2014140541 A2 | 18 September 2014 |
| | | EP 2973241 A2 | 20 January 2016 |
| | | US 2014279777 A1 | 18 September 2014 |
| CN 101833691 A | 15 September 2010 | None | |
| CN 101625735 A | 13 January 2010 | None | |
| US 5631469 A | 20 May 1997 | None | |

Form PCT/ISA/210 (patent family annex) (July 2009)